# EUROPEAN PATENT APPLICATION

(11) **EP 0 777 057 A1**
(43) Date of publication of application: **04.06.1997**
(21) Application number: 96117450.5
(22) Date of filing: 31.10.1996
(51) Int. Cl.: F16B 2/10

(54) **Improved clamp**

(30) Priority: 01.12.1995 IT PD950232
(71) Applicant: LINO MANFROTTO + CO. S.p.A., 36061 Bassano del Grappa (IT)
(72) Inventor: Battocchio, Gilberto, 36061 Bassano Del Grappa (VI) (IT)
(74) Representative: Cantaluppi, Stefano

(57) **Abstract**

The clamp described comprises a pair of jaws (3) connected to one another at corresponding ends (32) and having free opposite ends (3b), and a clamping device (19) acting between the jaws (3) and disposed at the opposite end to their free ends (3b) so as to be predominantly hidden by the jaws (3) when observed from the end corresponding to their free ends (3b).

## Description

The present invention relates to an improved clamp, particularly for coupling with polygonal-sectioned elements, comprising:
- a pair of jaws connected to one another at corresponding ends and having free opposite ends, and
- a clamping device acting between the jaws.

Clamps of the type indicated are used in the furnishing field for forming tubular frame structures, generally with square-sectioned tubular elements.

These clamps serve to couple the elements to one another and/or to support various accessories thereon.

Such a clamp typically comprises a pair of jaws between which the tubular element is housed and a device for clamping the jaws, normally disposed beside one of the jaws and extending through both.

Although known clamps perform their function effectively, they are quite bulky laterally, which may be undesirable in specific furnishing applications in which aesthetic requirements are of considerable importance.

Moreover, the lateral dimensions due to the projection of the device for clamping the jaws may, in some cases, make it difficult to position and fix the clamp and, in any case, may interfere with the space surrounding it.

Furthermore, since the clamping device generally involves the side of at least one of the two jaws, this side cannot conveniently be used as a surface for the connection of accessories or other clamps.

The problem upon which the present invention is based is that of providing a clamp which is designed structurally and functionally to overcome all of the disadvantages complained of with reference to the prior art mentioned.

This problem is solved by the invention by means of a clamp of the type indicated at the beginning, characterized in that the clamping device is arranged relative to the jaws and acts thereon at the opposite end to the free ends of the jaws.

According to a further characteristic of the clamp of the invention, the clamping device is entirely included within the projection of the dimensions of the jaws so as to be predominantly hidden by the jaws when observed from the end corresponding to their free ends.

Further characteristics and advantages of the invention will become clearer from the following detailed description of a preferred embodiment thereof, illustrated by way of non-limiting example in the appended drawings, in which:

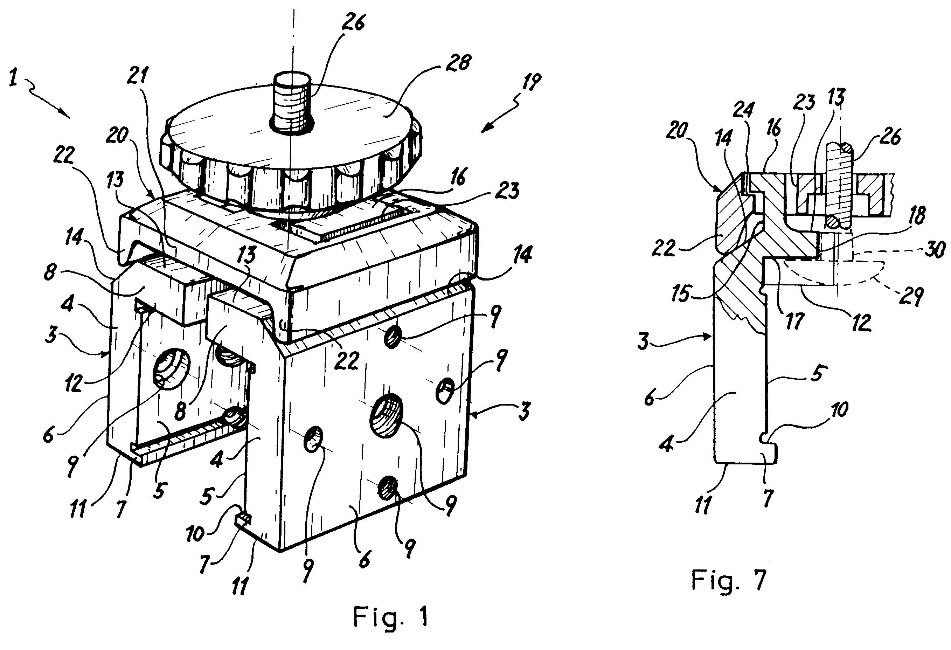

Figure 1 is a perspective view of a clamp formed according to the present invention,
Figure 2 is an exploded, perspective view of the clamp of Figure 1,
Figure 3 is a perspective view of the clamp of the preceding drawings, clamped onto a square-sectioned tubular element,
Figures 4 to 6 are front elevational views of the clamp of the preceding drawings, shown in three different stages of its operation,
Figure 7 is a partial section of a detail of the clamp of the preceding drawings.

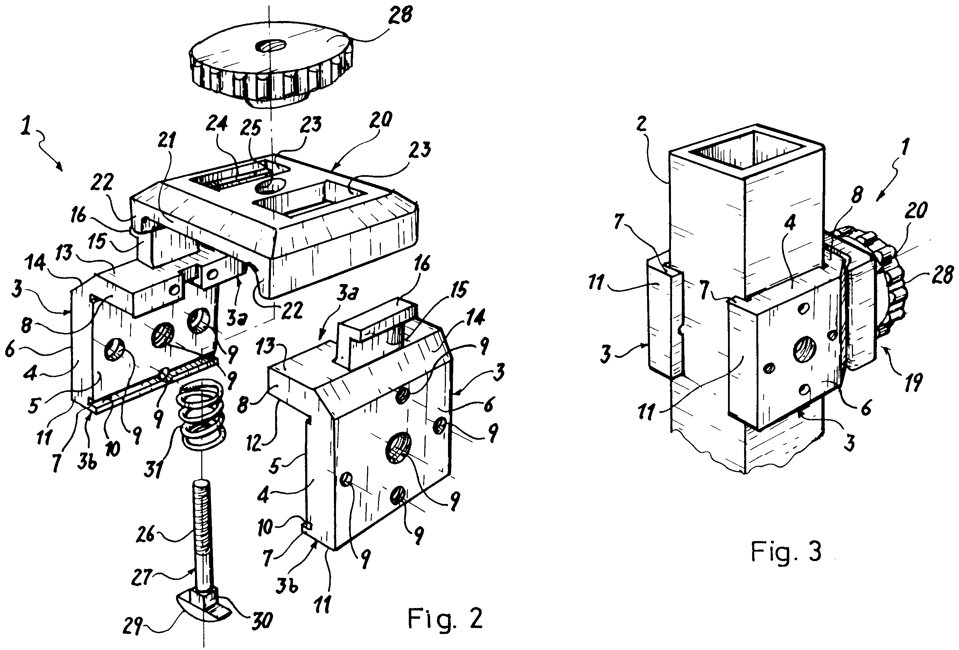

In the drawings, a clamp formed according to the present invention is generally indicated 1 and is arranged for coupling with a square-sectioned tubular element 2 (Figure 3). The clamp 1 is also suitable for use on elements with different polygonal or curvilinear cross-sections, possibly after modification of the shape of the jaws.

The clamp 1 comprises a pair of jaws, both indicated 3, connected to one another at corresponding ends 3a and having free opposite ends 3b.

Each jaw is generally C-shaped with a central portion 4 having opposed inner and outer surfaces 5 and 6, respectively, at opposite ends of which there are two flanges 7, 8 projecting by different distances from the surface 5.

The central portion 4 has a plurality of holes 9 each of which is threaded and extends between the surfaces 5 and 6. The holes are provided for the fixing of accessories and various tools, possibly including a corresponding jaw of an adjacent clamp.

The flange 7 which projects least defines a surface 10 adjacent the surface 5 and an opposed surface 11 which is normally in view when the clamp is clamped onto the element 2.

The flange 8 which projects farthest defines a surface 12, also adjacent the surface 5 and, on the opposite side thereto, two adjacent surfaces 13, 14, one parallel to the surface 12 and the other inclined at about 45^{o} thereto, towards the surface 6.

A substantially inverted, L-shaped appendage 15 with an outwardly-facing lip 16 extends from the surface 13.

The inner surfaces 5, 10, 12 of the jaws 3 (with reference to the condition of use of the clamp) jointly define the seat for housing the element 2.

The inner surface 12 of each flange 8 has a first groove 17 which extends from the surface 5 and the free end of which is intersected at right angles by a second groove 18 oriented towards the surface 13.

The clamp 1 also comprises a device, generally indicated 19, for clamping the jaws 3.

The clamping device 19 comprises a generally inverted U-shaped, plate-like pressure element 20, of which a central portion 21 and two opposite flanges 22 extending in the same direction are identified. The central portion 21 has two through holes 23 each housing the corresponding appendage 15 for the pivoting articulation of the respective jaw 3 on the pressure element 20. Each hole 23 defines a step formation 24 against which the lip 16 of the corresponding appendage 15 is engaged for the purpose of the above-described articulation of the jaw.

Between the holes 23 there is a through-hole 25 for a threaded shank 26 of a tie, generally indicated 27.

A hand wheel 28 is screwed onto the threaded portion of the shank 26; at the opposite end, the shank carries a head 29 with an undercut portion 30.

Finally, the clamping device 19 comprises a helical spring 31 between the pressure element 20 and the surfaces 13 of the jaws 3 for resiliently urging the jaws 3 towards an opened-out position.

When the clamp 1 is assembled, the flanges 22 of the pressure element 20 bear on the inclined surfaces 14 of the jaws 3 and the head 29 and the undercut portion 30 of the tie 27 are housed in the first and second grooves 17, 18, respectively.

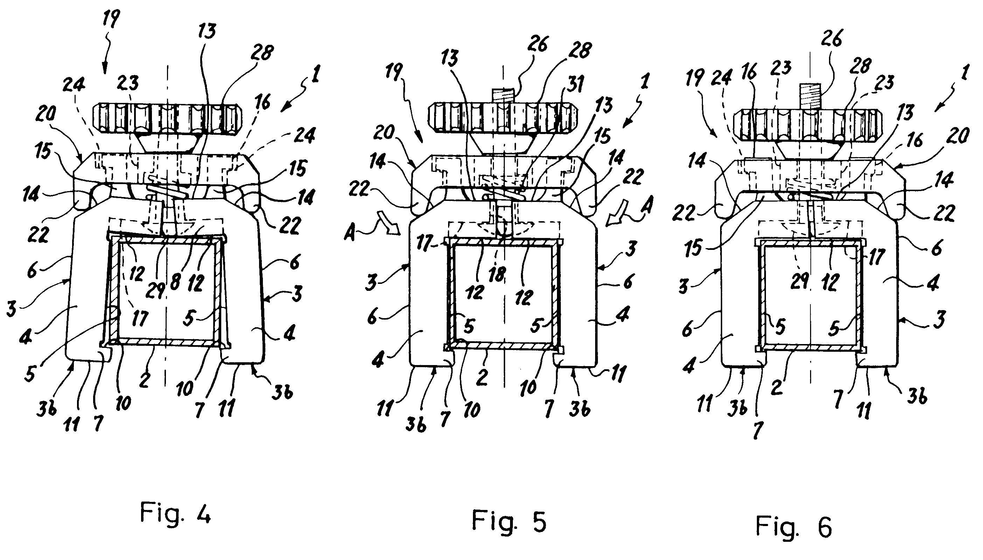

Starting from an opened-out position of the jaws 3 (Figure 4), the clamp 1 is fitted on the element 2 as follows.

First of all, the clamp is positioned on the element 2 which is disposed between the jaws 3; the head 29 of the tie 27 is drawn back towards the pressure element 20 by screwing of the hand wheel 28 on the threaded rod 26 in opposition to the spring 31.

As a result of this movement, owing to the lever arm between the point of contact of the lip 16 on the step formation 24 and the point of contact of the head 29 on the surface 12, the jaws 3 are pivoted towards one another, towards the profile 2 (Fig. 5 - arrow A).

It will be noted that a small translational movement of the jaws 3 towards one another in a substantially transverse direction relative to the surfaces 5 is brought about simultaneously with the pivoting as a result of the sliding movement of the flanges 22 along the inclined planes of the surfaces 14.

This translational movement is possible because the appendages 16 are articulated so as to be capable of limited sliding in the holes 23.

The surfaces 5 are thus clamped against the corresponding surfaces of the profile 2 with a substantially uniformly-distributed clamping pressure in the region of mutual contact.

It will be observed that, when the clamp is clamped onto the element 2, the clamping device 19 is wholly included within the projection of the dimensions of the jaws 3 so as to be hidden by the jaws when observed from the end having the surfaces 11.

The invention thus solves the problem set, achieving many advantages.

In particular, it will be appreciated that the action of the clamping device on the jaws is limited to the opposite ends of the jaws to their free ends so as not to interfere with their lateral surfaces.

Another advantage is that, when the clamp is clamped onto the element, the clamping device is completely hidden by the bulk of the jaws when observed from the end corresponding to their free ends.

## Claims

1. An improved clamp, particularly for coupling with polygonal-sectioned elements, comprising:
- a pair of jaws (3) connected to one another at corresponding ends (3a) and having free opposite ends (3b), and
- a clamping device (19) acting between the jaws (3), characterized in that the clamping device is arranged relative to the jaws and acts thereon at the opposite end to the free ends of the jaws (3b).

2. A clamp according to Claim 1, in which the clamping device (19) is wholly included in the projection of the dimensions of the jaws (3) at the opposite end to their free ends (3b) so as to be predominantly hidden by the jaws (3) when observed from the end corresponding to the free ends (3b).

3. A clamp according to Claim 2, in which the interaction of the clamping device (19) with the jaws (3) is limited to opposite ends of the jaws (3) to the free ends (3b) so as not to interfere with lateral surfaces (5, 10, 12) of the jaws (3) extending between the free ends (3b) and the corresponding opposite ends (3a).

4. A clamp according to one or more of the preceding claims in which the jaws (3) are articulated on a pressure element (20) of the clamping device (19) so as to be pivotable about an axis, the pressure element (20) being translatable away from and towards the jaws (3) and acting on at least one jaw in a position spaced from the articulation axis so as to pivot the at least one jaw as a result of the translation of the pressure element (20) relative to the jaws (3).

5. A clamp according to Claim 4, in which the at least one jaw is articulated with a limited ability to translate on the pressure element (20), and in which a contact surface (14) provided between the pressure element (20) and the corresponding jaw (3) is inclined to the direction of translation of the pressure element so that, for a relative displacement between the jaws (3) and the pressure element (20) there is a translation of the jaws away from or towards one another.

6. A clamp according to Claim 4 or Claim 5, in which the clamping device (19) comprises a hand wheel (28) screwed onto the opposite end of the tie (27) to the jaws (3), for moving the pressure element (20) away from and towards the jaws (3).

7. A clamp according to one or more of the preceding claims, in which resilient means (31) are provided and act on the jaws (3) to urge them towards an opened-out position.

8. A clamp according to one or more of the preceding claims, in which each jaw (3) comprises a central portion (4) carrying means (9) for the attachment of accessories.
